# EUROPEAN PATENT SPECIFICATION

(11) **EP 2 060 409 B1**
(45) Date of publication and mention of the grant of the patent: **21.12.2011**
(21) Application number: 07022136.1
(22) Date of filing: 14.11.2007
(51) Int. Cl.: B60B 33/02

(54) **Truckle assembly**
Lenkrollenanordnung
Construction de roulette

(43) Date of publication of application: 20.05.2009
(73) Proprietor: Haion Caster Industrial Co., Ltd., Taipei County 241 (TW)
(72) Inventor: Chou, Chuan-Hai, Sanchong City, Tapei County 241 (TW)
(74) Representative: Horak, Michael

(56) References cited:
- WO-A-2006/040234
- DE-C1- 19 504 073
- DE-C1- 19 720 574

## Description

### BACKGROUND OF THE INVENTION

### a) Field of the invention

The present invention relates to a truckle assembly, and in particular to relate to a truckle assembly capable of limiting movement and rotation simultaneously.

### b) Description of the Prior Art

A conventional truckle assembly typically comprises a housing and a wheel pivoted to the housing. An arresting member is provided between the housing and the wheel for pressing against a metal plate on the wheel. An axis pole is mounted on an end of the housing. In use, the truckle wheel is mounted on a bottom of an object which wants to move. The object is brought to move when the truckle assembly moves. The axis pole rotates to make the wheel be able to move in multiple directions. As the object arrives at a desired position, the arresting member presses the wheel to stop the truckle assembly.

In prior art, the wheel is pressed to stop movement of the truckle assembly. However, rotation direction of the wheel is not limited. Correspondingly, when the truckle assembly is arrested, the axis pole can still change rotation direction thereof. The movement and rotation direction of the truckle assembly can not be effectively limited at a time, and therefore can not meet practical demand.

DE 195 04 073 C1 discloses a caster wheel having a pivoted carrier with wheel axis, carrying two wheels, and a brake unit. A brake lever simultaneously acts vertically on the wheel brake part and on the pivot locking part which is movably connected to it. The wheel brake part is located approximately above the wheel axle. Its two outer toothings engage into the internally toothed rims. The pivot locking part engages partially over the wheel brake part. It has a horizontal toothed ring section which extends under a counter toothing on the end of the pivot bolt.

WO 2006/040234 A discloses a caster comprising a support, a swivel pin, at least one running wheel, and a device that is used for blocking the swiveling movement and is to be actuated by a pedal. The brake is engaged by horizontally displacing a brake part. In order to further develop a caster of said type in an advantageous manner regarding the design, the swiveling movement is blocked by vertically displacing a swivel catch.

DE 197 20 574 C1 discloses a steering castor having a pivotally mounted carrier which supports the wheel axle, to which two wheel are mounted. Each wheel has a hub on which a tyre is mounted. A switch cam lever controls the actuation of the wheel brake. The pivot stop adjuster and wheel brake are made as an integral sealed brake arm which extends vertically through a mounting opening and is insertable and fixable in the castor.

### SUMMARY OF THE INVENTION

Accordingly, to overcome the above deficiency, an object of the present invention is to provide a truckle assembly which simultaneously limits movement and rotation.

The truckle assembly of the present invention comprises a housing, a rotating unit, a limiting unit and a wheel assembly. The housing includes a body, and a sleeve on an end of the body and communicating with interior of the body. A through hole is defined through opposite sides of the body. A slope portion is formed inside the body and neighboring the sleeve. The rotating unit is movably mounted on the sleeve of the housing, and includes a central shaft, and a gear ring mounted on the central shaft for corresponding to a first side of the slope portion. The limiting unit includes a pedal, an interferential portion linking an end of the pedal, and an arresting portion linking an end of the interferential portion. The pedal has a first portion extending into the housing, and a second portion extending out of the housing. The interferential portion corresponds to a second side of the slope portion. The arresting portion has two sides respectively extending out of the through hole of the housing. The wheel assembly includes at least a wheel assembled on sides of the housing, and a shaft pole extending through the wheels and the pedal. Each wheel forms a toothed portion adjacent the housing for corresponding to the arresting portion.

### BRIEF DESCRIPTION OF THE DRAWINGS

Fig. 1 is a perspective view of a truckle assembly according to the present invention.
Fig. 2 is an exploded view of the truckle assembly of Fig. 1.
Figs. 3 and 4 are side views of the truckle assembly, and wherein the truckle assembly is partially taken away for being clearly shown in use.

### DETAILED DESCRIPTION OF THE PREFERRED EMBODIMENTS

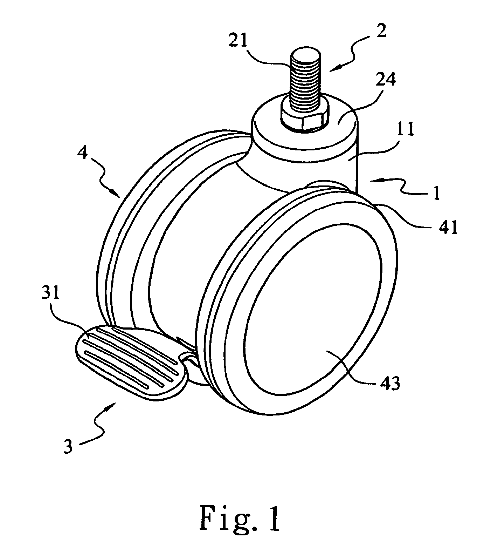

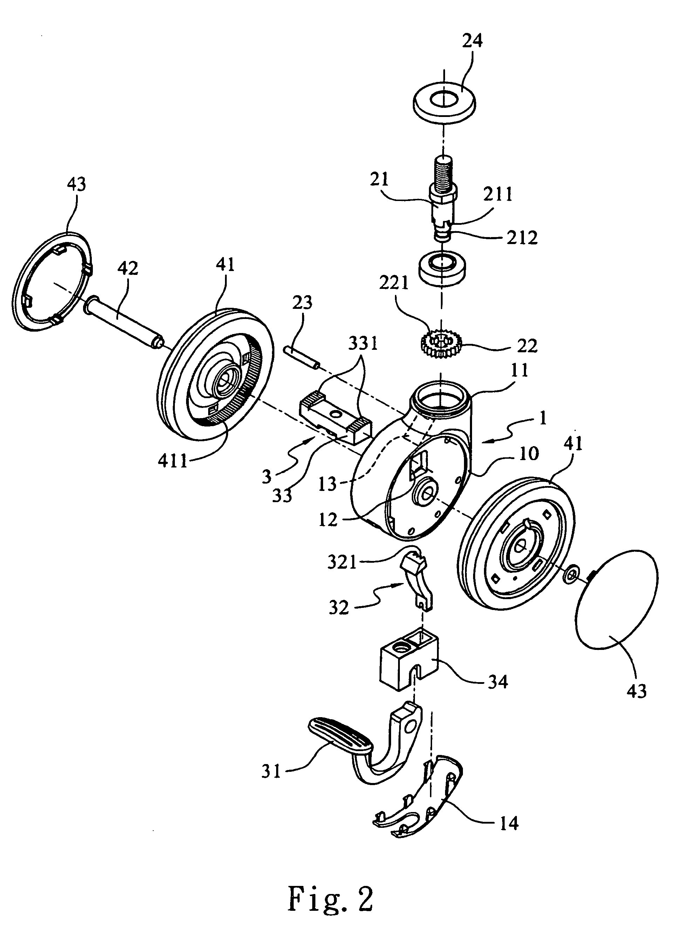

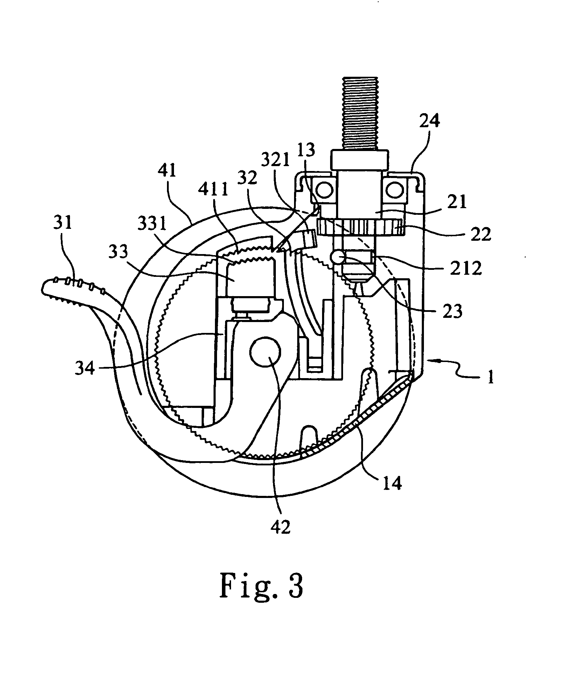

Referring to Figs. 1, 2 and 3, a truckle assembly in accordance with the present invention comprises a housing 1, a rotating unit 2, a limiting unit 3 and a wheel assembly 4. The limiting unit 3 is able to limit movement and rotation directions of the truckle assembly simultaneously.

The housing 1 includes a body 10, and a sleeve 11 on an end of the body 10 and communicating with interior of the body 10. A through hole 12 is transversely defined through opposite sides of the body 10. A slope portion 13 with an angle of substantially 45° is formed inside the body 10 and neighboring the sleeve 11. A bottom cover 14 is provided on a bottom of the body 10.

The rotating unit 2 is movably mounted on the sleeve 11 of the housing 1, and includes a central shaft 21, and a gear ring 22 mounted on the central shaft 21 for corresponding to a first side (not labeled) of the slope portion 13. The central shaft 21 defines a plurality of cutouts 211, which are distributed around an appropriate position thereof. The gear ring 22 forms a plurality of ribs 221 along an inner edge thereof for embedding into the cutouts 211. A recess 212 is defined around an end of the central shaft 21, and a pin 23 extends through the housing 1 for cooperating with the recess 212 for cooperating with the recess 212 to limit the central shaft 21 in the sleeve 11. A closing cover 24 is mounted around the rotating unit 2 for enclosing the sleeve 11.

The limiting unit 3 includes a pedal 31, an interferential portion 32 linking an end of the pedal 31, and an arresting portion 33 linking an end of the interferential portion 32. The pedal 31 has a first portion (not labeled) extending into the housing 1, and a second portion (not labeled) extending out of the housing 1. A pushing block 34 is assembled on the first portion of the pedal 31, and the interferential portion 32 and the arresting portion 33 are assembled to the pushing block 34. The interferential portion 32 corresponds to a second side (not labeled) of the slope portion 13, and forms a meshing portion 321 adjacent the slope portion 13 in assembly. The arresting portion 33 has two sides respectively extending out of the through hole 12. The arresting portion 33 forms indented portions 331 on sides thereof.

The wheel assembly 4 comprises at least a wheel 41 assembled on sides of the housing 1, and a shaft pole 42 extending through the wheels 41 and the pedal 31. Each wheel 41 forms a toothed portion 411 on a side thereof and adjacent the housing 1 for corresponding to the indented portion 331 of the arresting portion 33. Side covers 43 are assembled to outward sides of the wheels 41 to protect the wheels 41.

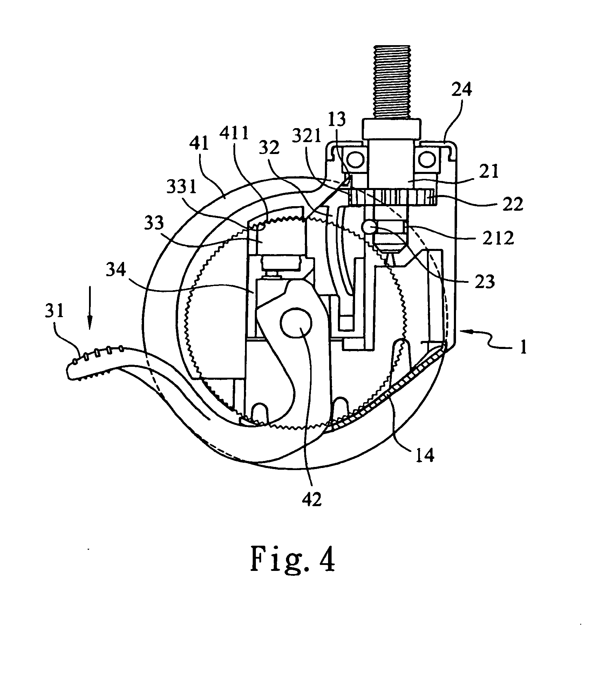

Referring to Figs. 1, 3 and 4, in use, an object (not shown) is assembled on the central shaft 21 of the rotating unit 2. When an external force presses against the second portion of the pedal 31, the shaft pole 42 takes the first portion of the pedal 31 to move upwardly. The first portion of the pedal 31 pushes the pushing block 34 to move upwardly, and brings the interferential portion 32 and the arresting portion 33 to move upwardly. The interferential portion 32 moves along the slope portion 13 and toward the sleeve 11 until the meshing portion 321 of the interferential portion 32 meshes with the gear ring 22 of the rotating unit 2. Thus rotation of the rotating unit 2 is thus stopped. As the interferential portion 32 moves, the arresting portion 33 moves upwardly inside the through hole 12 of the housing 1. The indented portions 331 of the arresting portion 33 respectively mesh with the toothed portions 411 of the wheels 41. Movement of the wheel assembly 4 is thus limited. Generally speaking, rotation and movement of the truckle assembly is reliably stopped at a time when the pedal 31 is pressed.

## Claims

1. A truckle assembly comprising:
a housing (1) including a body (10) and a sleeve (11) on an end of the body (10) and communicating with the interior of the body (10), a through hole (12) being defined through opposite sides of the body (10), a rotating unit (2) movably mounted on the sleeve (11) of the housing (1), and including a central shaft (21), and a gear ring (22) mounted on the central shaft (21), a limiting unit (3) including a pedal (31), an interferential portion (32) linked to an end of the pedal (31), and an arresting portion (33) linked to an end of the interferential portion (32), the pedal (31) having a first portion extending into the housing (1), and a second portion extending out of the housing (1), the arresting portion (33) having two sides respectively extending out of the through hole (12) of the housing (1);
and a wheel assembly (4) including at least a wheel (41) assembled on the sides of the housing (1), and a shaft pole (42) extending through the at least one wheel (41) and the pedal (31), each wheel (41) forming a toothed portion (411) adjacent the housing (1) for corresponding to the arresting portion (33);
the truckle assembly being **characterized in that**
it comprises a slope portion (13) being formed inside the body (10) and neighboring the sleeve (11);
a gear ring (22) is mounted on the central shaft (21) for corresponding to a first side of the slope portion (13);
the interferential portion (32) corresponds to a second side of the slope portion and toward the sleeve (11) until a meshing portion (321) of the interferential portion (32) meshes with the gear ring (22) of the rotating unit (2).

2. The truckle assembly as claimed in claim 1, wherein the slope portion (13) forms an angle of substantially 45°.

3. The truckle assembly as claimed in claim 1, wherein a bottom cover (14) is provided on a bottom of the body (10).

4. The truckle assembly as claimed in claim 1, wherein a closing cover (24) is mounted around the rotating unit (2) for enclosing the sleeve (11).

5. The truckle assembly as claimed in claim 1, wherein a recess (212) is defined around an end of the central shaft (21), and a pin (23) extends through the housing (1) for cooperation with the recess (212).

6. The truckle assembly as claimed in 1, wherein the central shaft (21) defined a plurality of cutouts (211) around an appropriate position thereof, and wherein the gear ring (22) forms a plurality of ribs (221) along an inner edge thereof for embedding into the cutouts (211).

7. The truckle assembly as claimed in claim 1, wherein a pushing block (34) is assembled on the first portion of the pedal (31), and the interferential portion (32) and the arresting portion (33) are assembled to the pushing block (34).

8. The truckle assembly as claimed in claim 1, wherein the interferential portion (32) forms a meshing portion (321) adjacent the slope portion (13) in assembly.

9. The truckle assembly as claimed in claim 1, wherein the arresting portion (33) forms indented portions (331) on sides thereof, and wherein the at least a wheel (41) forms a toothed portion (411) on a side thereof for corresponding to the indented portion (32).

10. The truckle assembly as claimed in claim 1, wherein side covers (43) are assembled to outward sides of the at least a wheel (41).

## Patentansprüche

1. Eine Laufrolle bestehend aus:
Einem Gehäuse (1) mit einem Hauptteil (10) und einem Schaft (11) am Ende des Haupteils (10); einem Durchgangsloch (12), das durch die gegenüberliegenden Seiten des Haupteils (10) abgegrenzt wird; einer Rotationseinheit (12), welche beweglich auf dem Schaft (11) des Gehäuses angebracht ist und einen Zentralschaft sowie einen auf dem Zentralschaft angebrachten Getriebering (22) enthält; eine Begrenzungseinheit (3) inklusive Pedale (3), einer Interferenzialkomponente (32), der Pedaleinheit (31), von der ein Teil ins Gehäuse (1) ragt und einem der daraus herausragt; die Arretiereinheit (33) mit zwei Teilen jeweils aus dem Duchlassloch (12) des Gehäuse (1) ragend und einem Radaufbau (4), mit wenigstens einem Rad (41) auf den Seiten des Gehäuses (1) angebracht und einer Schaftstange (42), die sich durch mindestens ein Rad (41) und die Pedale (31) erstreckt. Jedes Rad verfügt über eine Verzahnung (411), welche auf dem Gehäuse (1) des jeweiligen Arretierbereich (33) aufliegt;
Das besondere an der Laufrolle ist, dass sie eine Kantenneigung (13) besitzt, die durch den Hauptteil (10) und den Schaft (11) gebildet wird. Ein Getriebering (22) ist auf den Zentralschaft (21) gemäß der Position der ersten Seite der Kantenneigung (13) angebracht.
Der Interferenzialbereich (32) interagiert mit einer der zweiten Seite der Kantenneigung (13) zum Schaft (11) hin, bis die Verzahnung (321) des Interferenzialbereichs (32) in den Getriebering (22) der Rotationseinheit (2) greift.

2. Die Laufrolleneinheit aus Anspruch 1, in der die Kantenneigung (13) einen Winkel von substanziellen 45 Grad bildet.

3. Die Laufrolleneinheit aus Anspruch 1, in der die Unterseitenabdeckung (14) auf der Unterseite des Hauptteils (10) angebracht ist.

4. Die Laufrolleneinheit aus Anspruch 1, in der eine Verschlussabdeckung (24) um die Rotationseinheit (2) angebracht ist, um den Schaft (11) zu umfassen.

5. Die Laufrolleneinheit aus Anspruch 1, in der ein Einlass (212) um das Ende des Zentralschafts (21) gebildet wird, und ein Pin (23) durch das Gehäuse (1) für die Interaktion mit dem Einlass (212) ragt.

6. Die Laufrolleneinheit aus Anspruch 1, in der der Zentralschaft (21) aus einer Vielzahl an Auffräsungen (211) in einer probaten Position davon gebildet wird und in dem ein Getriebering (22) eine Vielzahl an Rippelungen (221) am inneren Ende der darin eingebetteten Verfräsungen (211) bildet.

7. Die Laufrolleneinheit aus Anspruch 1, in der ein Schiebeblock (34) auf dem ersten Bereich der Pedale (31) angebaut ist und der Interferenzialbereich (32) sowie die Arretiereinheit (33) durch den Schiebeblock (34) gebildet werden.

8. Die Laufrolleneinheit aus Anspruch 1, in der der Interfenenzialbereich (32) einen Zahneingriff (321) neben der Kantenneigung (13) bildet.

9. Die Laufrolleneinheit aus Anspruch 1, in der die Arretierposition (33) einen eingezahnten Bereich (331) beinhaltet und in der es mindestens ein Rad (41) mit Verzahnung (441) auf der jeweiligen Seite des eingezahnten Bereichs (32) gibt.

10. Die Laufrolle aus Anspruch 1, in der die Seitenabdeckungen (43) auf den Außenseiten von wenigstens einem Rad (41) anliegen.

## Revendications

1. Assemblage de roulette, comprenant :
un logement (1) comprenant un corps (10) et une douille (11) sur un bout du corps (10) et se connectant avec l'intérieur du corps (10), un trou de passage (12) étant défini par les côtés opposés du corps (10), une unité rotative (2) montée d'une manière mobile sur la douille (11) du corps (1), et comprenant un arbre central (21), et une couronne dentée (22) montée sur l'arbre central (21), une unité de limite (3) comprenant une pédale (31), une partie interférentielle (32) liée à un bout de la pédale (31), et une partie d'arrêt (33) liée à un bout de la partie interférentielle (32), la pédale (31) ayant une première partie s'étendant dans le logement (1), et une deuxième partie dans l'extérieur du logement (1), la partie d'arrêt (33) ayant deux côtés s'étendant respectivement dans l'extérieur du trou de passage (12) du logement (1) ;
et un assemblage de roue (4) comprenant au moins une roue (41) assemblée sur les côtés du logement (1), et un pôle d'arbre (42) s'étendant par au moins une roue (41) et la pédale (31), chaque roue (41) formant une partie dentée (411) adjacente au logement (1) pour correspondre à la partie d'arrêt (33) ;
assemblage de roulette **caractérisé en ce que** :
il comprend une partie inclinée (13) étant formée dans l'intérieur du corps (10) et étant proche de la douille (11) ;
une couronne dentée (22) est montée sur l'arbre central (21) pour correspondre au premier côté de la partie inclinée (13) ;
une partie interférentielle (32) correspond à un deuxième côté de la partie inclinée et vers la douille (11) jusqu'à une partie de maille (321) de la partie interférentielle (32) se croise avec la couronne dentée (22) de l'unité rotative (2).

2. Assemblage de roulette selon la revendication 1, **caractérisé en ce que** la partie inclinée (13) forme substantiellement un angle de 45°.

3. Assemblage de roulette selon la revendication 1, **caractérisé en ce que** un couvercle inférieur (14) est fourni sur un fond du corps (10).

4. Assemblage de roulette selon la revendication 1, **caractérisé en ce que** un couvercle de fermeture (24) est monté autour de l'unité rotative (2) pour enfermer la douille (11).

5. Assemblage de roulette selon la revendication 1, **caractérisé en ce que** un enfoncement (212) est défini autour d'un bout de l'arbre central (21), et une broche (23) s'étend par le logement (1) pour la coopération avec l'enfoncement (212).

6. Assemblage de roulette selon la revendication 1, **caractérisé en ce que** l'arbre central (21) a défini une pluralité de coupures (211) autour d'une partie appropriée, donc, la couronne dentée (22) forme une pluralité de côtes (211) avec une bordure interne pour s'encastrer dans les coupures (211).

7. Assemblage de roulette selon la revendication 1, **caractérisé en ce que** un bloc de poussée (34) est assemblé sur la première partie de la pédale (31), et la partie interférentielle (32) et la partie d'arrêt (33) sont assemblées au bloc de poussée (34).

8. Assemblage de roulette selon la revendication 1, **caractérisé en ce que** la partie interférentielle (32) forme une partie de maille (321) adjacente à la partie inclinée (13) dans l'assemblage.

9. Assemblage de roulette selon la revendication 1, **caractérisé en ce que** la partie d'arrêt (33) forme les parties dentelées (331) sur les côtés, donc, au moins une roue (41) forme une partie dentée (411) sur un côté pour correspondre à la partie dentelée (32).

10. Assemblage de roulette selon la revendication 1, **caractérisé en ce que** les couvercles latéraux (43) sont assemblés aux côtés extérieurs d'au moins une roue (41).
